# EUROPEAN PATENT APPLICATION

(11) **EP 4 614 680 A1**
(43) Date of publication of application: **10.09.2025**
(21) Application number: 24863187.1
(22) Date of filing: 04.09.2024
(51) Int. Cl.: H01M 10/6552, H01M 10/6556, H01M 10/613

(54) **BATTERY CELL ASSEMBLY AND BATTERY PACK COMPRISING SAME**

(30) Priority: 07.09.2023 KR 20230119233
(71) Applicant: LG Energy Solution, Ltd., Seoul 07335 (KR)
(72) Inventor: KIM, Jae Wook, Daejeon 34122 (KR); KIM, Gwan Woo, Daejeon 34122 (KR); JANG, Sung Hwan, Daejeon 34122 (KR); KIM, Da Young, Daejeon 34122 (KR); SHIN, Byeong Ha, Daejeon 34122 (KR)
(74) Representative: BCKIP Part mbB
(86) International application number: PCT/KR2024/013323
(87) International publication number: WO 2025/053607

(57) **Abstract**

The present technology provides a battery cell assembly including a cell block with a plurality of battery cells, an upper cover plate provided on the cell block and including a cooling channel, a first pipe connected to a first port of the upper cover plate and configured to transfer a cooling fluid, and a first support structure configured to support the first pipe, in which the first pipe includes a first part extending downward from the first port of the upper cover plate, a second part extending from the first part in a direction crossing a direction in which the first part extends, and a third part extending upward from the second part.

## Description

### [Technical Field]

The present invention relates to a battery cell assembly and a battery pack including the same.

This application claims the benefit of priority based on Korean Patent Application No. 10-2023-0119233, filed on September 7, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present invention is directed to providing a battery cell assembly with improved safety, and a battery pack.

### [Technical Solution]

An aspect of the present invention provides a battery cell assembly including a cell block with a plurality of battery cells, an upper cover plate provided on the cell block and including a cooling channel, a first pipe connected to a first port of the upper cover plate and configured to transfer a cooling fluid, and a first support structure configured to support the first pipe, and the first pipe includes a first part extending downward from the first port of the upper cover plate, a second part extending from the first part in a direction crossing a direction in which the first part extends, and a third part extending upward from the second part.

In example embodiments, an upper end of the third part of the first pipe may be an end of the first pipe, and the upper end of the third part of the first pipe may be located at a position below than the first port of the upper cover plate.

In example embodiments, the first support structure may include a first bottom support provided below the second part of the first pipe and configured to support the second part of the first pipe.

In example embodiments, the battery cell assembly may further include a first elastic pad between the first bottom support and the second part of the first pipe.

In example embodiments, the first support structure may further include a first side support configured to support a side of the first part of the first pipe.

In example embodiments, the battery cell assembly may further include a second pipe connected to a second port of the upper cover plate and configured to transfer the cooling fluid, and a second support structure configured to support the second pipe, one of the first pipe and the second pipe may be configured to transfer the cooling fluid supplied from the outside to the cooling channel of the upper cover plate, and the other one of the first pipe and the second pipe may be configured to transfer the cooling fluid discharged from the cooling channel of the upper cover plate to the outside.

In example embodiments, the second pipe may include a fourth part extending downward from the second port of the upper cover plate, a fifth part extending from the fourth part in a direction crossing a direction in which the fourth part extends, and a sixth part extending upward from the fifth part.

In example embodiments, an upper end of the sixth part of the second pipe may be an end of the second pipe, and the upper end of the sixth part of the second pipe may be located at a position below than the second port of the upper cover plate.

In example embodiments, the second support structure may include a second bottom support provided below the fifth part of the second pipe and configured to support the fifth part of the second pipe.

In example embodiments, the battery cell assembly may further include a second elastic pad between the second bottom support and the fifth part of the second pipe.

In example embodiments, the second support structure may further include a second side support configured to support a side of the fourth part of the second pipe.

In example embodiments, the upper cover plate may include a protruding part extending to a side of the cell block, and the first port and the second port of the upper cover plate may be on a lower surface of the protruding part of the upper cover plate.

In example embodiments, the battery cell assembly may further include an end plate facing a front surface of the cell block and including the first support structure, a side cover plate facing a side of the cell block and including a fastening flange to be fastened to an external structure, and a lower cover plate facing a lower surface of the cell block.

In example embodiments, the first pipe may be coupled to the upper cover plate by welding.

An aspect of the present invention provides a battery pack including a pack housing, and a battery cell assembly accommodated in the pack housing, and the battery cell assembly includes: a cell block with a plurality of battery cells; an upper cover plate provided on the cell block and including a cooling channel; a first pipe connected to a first port of the upper cover plate and configured to transfer a cooling fluid, the first pipe including a first part extending downward from the first port, a second part extending from the first part in a direction crossing a direction in which the first part extends, and a third part extending upward from the second part; a second pipe connected to a second port of the upper cover plate and configured to transfer the cooling fluid, the second pipe including a fourth part extending downward from the second port, a fifth part extending from the fourth part in a direction crossing a direction in which the fourth part extends, and a sixth part extending upward from the fifth part; a first support structure configured to support a lower portion of the second part of the first pipe; and a second support structure configured to support a lower portion of the fifth part of the second pipe.

### [Advantageous Effects]

Example embodiments of the present invention provides a battery cell assembly with a cooling function, in which coupling reliability between a cooling fluid and pipes for supplying and discharging a cooling fluid can be improved to increase the reliability of cooling performance of the battery cell assembly and improve the safety and reliability of the battery cell assembly.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery cell assembly according to example embodiments of the present invention.
FIG. 2 is an enlarged perspective view of a part of the battery cell assembly of FIG. 1.
FIG. 3 is a perspective view of an end plate of the battery cell assembly of FIG. 1.
FIG. 4 is a conceptual diagram schematically illustrating a flow path of a cooling fluid in the battery cell assembly of FIG. 1.
FIG. 5 is a perspective view of a first pipe of the battery cell assembly of FIG. 1.
FIG. 6 is a perspective view of a second pipe of the battery cell assembly of FIG. 1.
FIG. 7 is a side view of a part of a battery cell assembly according to embodiments of the present invention.
FIG. 8 is a cross-sectional view of a battery pack according to example embodiments of the present invention.
FIG. 9 is a schematic view of an electric vehicle in which a battery pack according to example embodiments of the present invention is installed.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

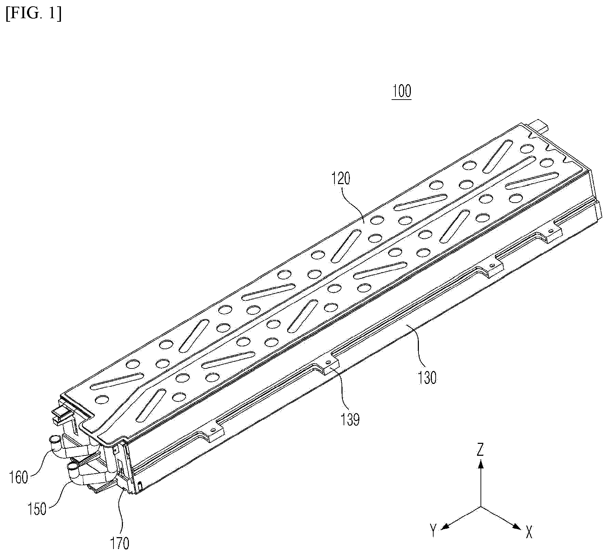

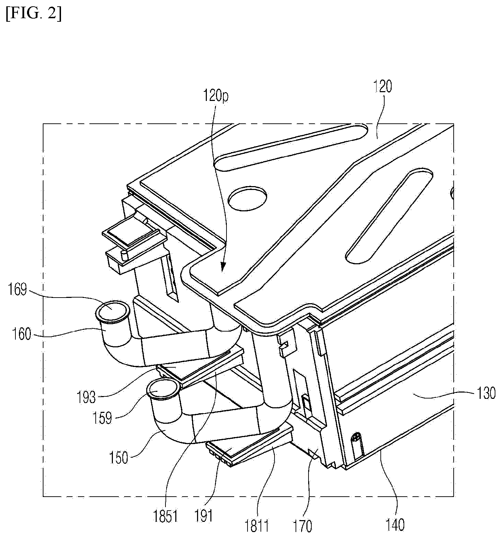

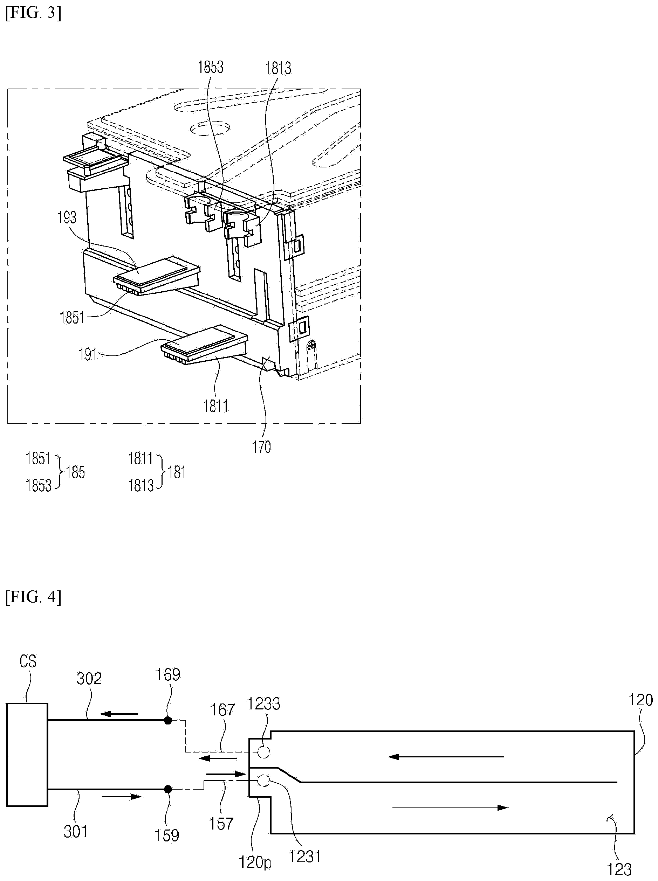

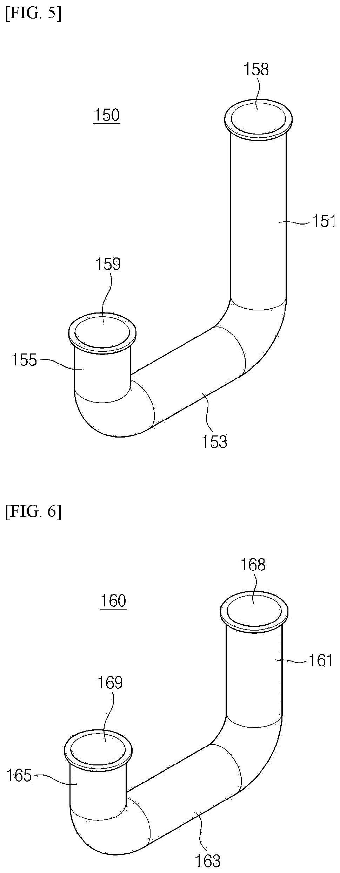

FIG. 1 is a perspective view of a battery cell assembly 100 according to example embodiments of the present invention.FIG. 2 is an enlarged perspective view of a part of the battery cell assembly 100 of FIG. 1.FIG. 3 is a perspective view of an end plate 170 of the battery cell assembly 100 of FIG. 1.FIG. 4 is a conceptual diagram schematically illustrating a flow path of a cooling fluid in the battery cell assembly 100 of FIG. 1.FIG. 5 is a perspective view of a first pipe 150 of the battery cell assembly 100 of FIG. 1.FIG. 6 is a perspective view of a second pipe 160 of the battery cell assembly 100 of FIG. 1.

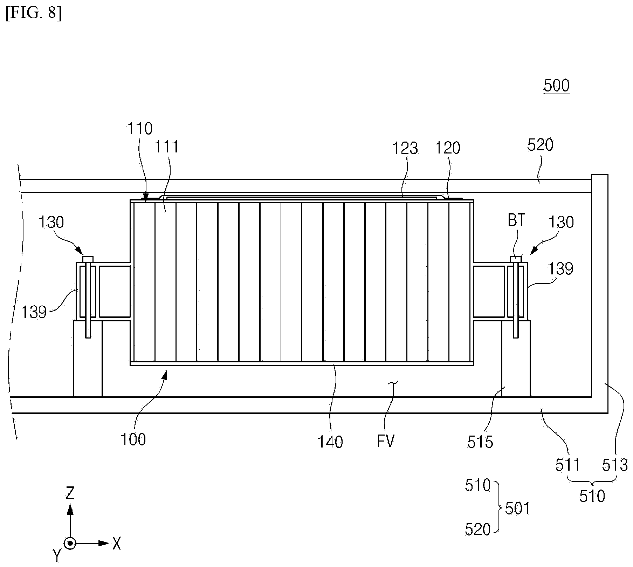

Referring to FIGS. 1 to 6, the battery cell assembly 100 may include a cell block 110 of FIG. 8, an upper cover plate 120, side cover plates 130, a lower cover plate 140 of FIG. 8, the first pipe 150, the second pipe 160, and end plates 170. The upper cover plate 120, the side cover plates 130, and the lower cover plate 140 may form a case of the battery cell assembly 100 surrounding the cell block 110.

The cell block 110 may include a plurality of battery cells 111 of FIG. 8.Each of the battery cells 111 is a basic unit of a lithium ion battery, i.e., a secondary battery. Each of the battery cells 111 may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The plurality of battery cells 111 may be connected in series and/or in parallel. For example, the plurality of battery cells 111 may be connected to each other in series. For example, the plurality of battery cells 111 may be connected to each other in parallel. For example, when a set of two or more battery cells 111 connected in parallel is defined as a bank, one bank including two or more battery cells 111 connected in parallel and another bank including two or more battery cells 111 connected in parallel may be connected in series.

Each of the battery cells 111 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In example embodiments, the battery cells 111 may be pouch type battery cells and be stacked together in one battery cell assembly 100 in a first direction (an X-axis direction).In example embodiments, in each battery cell assembly 100, the plurality of battery cells 111 may be pouch type battery cells whose length in the first direction (the X-axis direction) is less than a length thereof in a second direction (a Y-axis direction) and be stacked in the first direction (the X-axis direction).

When viewed from a plan view, the cell block 110 may have a rectangular shape whose length in the first direction (the X-axis direction) is less than a length thereof in the second direction (the Y-axis direction).In this case, the cell block 110 may have two sides (i.e., a first side and a second side) facing each other in the first direction (the X-axis direction), a front surface and a rear surface facing each other in the second direction (the Y-axis direction), and an upper surface and a lower surface facing each other in a vertical direction (a Z-axis direction).

A bus bar frame on which bus bars are mounted may be on each of the front and rear surfaces of the cell block 110. A plurality of bus bars may be mounted on the bus bar frame on the front surface of the cell block 110, and a plurality of bus bars may be mounted on the bus bar frame on the rear surface of the cell block 110.One of the end plates 170 may be on the front surface of the cell block 110, and the other may be on the rear surface of the cell block 110. The end plates 170 may cover bus bar frames connected to the front and rear surfaces of the cell block 110.

A bus bar may be coupled to an electrode lead of the battery cell 111. For example, the bus bar may be coupled to the electrode lead of the battery cell 111 by welding. For example, each bus bar may be an inter-bus bar coupled to electrode leads coupled to different battery cells 111 belonging to the cell block 110 to electrically connect the different battery cells 111. For example, each bus bar may be a terminal bus bar for electrically connecting the battery cell assembly 100 to another external battery cell assembly 100 or another electrical device.

In example embodiments, the battery cell assembly 100 may include a single cell block 110.In example embodiments, the battery cell assembly 100 may include a cell block array with a plurality of cell blocks 110 arranged in the second direction (the Y-axis direction). For example, the battery cell assembly 100 may include two cell blocks 110 arranged in the second direction (the Y-axis direction). For example, the battery cell assembly 100 may include a first cell block and a second cell block arranged in the second direction (Y direction) and electrically connected to each other.

The upper cover plate 120 may cover the upper surface of the cell block 110. The upper cover plate 120 may be coupled to upper ends of two side cover plates 130 on both sides of the cell block 110. For example, one side of the upper cover plate 120 may be coupled to the upper end of one of the side cover plates 130 by welding, and another side thereof may be coupled to the upper end of the other side cover plate 130 by welding.

The upper cover plate 120 may be attached to the upper surface of the cell block 110 and be thermally coupled to the cell block 110. For example, the upper cover plate 120 may be attached to the upper surface of the cell block 110 through a thermally conductive adhesive layer between the upper cover plate 120 and the upper surface of the cell block 110. For example, the thermally conductive adhesive layer may include a thermal interface material (TIM).

The upper cover plate 120 may include a cooling channel 123 configured to allow a first cooling fluid to flow therethrough and be configured to cool the cell block 110. The upper cover plate 120 may include a first port 1231 to which the first pipe 150 is connected, and a second port 1233 to which the second pipe 160 is connected. One of the first port 1231 and the second port 1233 of the upper cover plate 120 may include an inlet of the cooling channel 123 to which a cooling fluid flows, and the other may include an outlet of the cooling channel 123 from which the cooling fluid is discharged. The cooling channel 123 may include a single path extending from the inlet thereof to the outlet thereof. While the cooling fluid flows along the cooling channel 123, the battery cell assembly 100 may be cooled. For example, the upper cover plate 120 may be manufactured by bonding two plates, and the cooling channel 123 may include a space defined between the two plates.

In example embodiments, the first upper 1231 of the upper cover plate 120 may include the inlet of the cooling channel 123, and the second port 1233 thereof may include the outlet of the cooling channel 123. The cooling fluid provided from the outside of the battery cell assembly 100 may flow into the cooling channel 123 through the first port 1231 of the upper cover plate 120, flow along the cooling channel 123, and then flow out of the upper cover plate 120 through the second port 1233 of the upper cover plate 120.

The upper cover plate 120 may include a protruding part 120p protruding from the cell block 110 to one side. For example, the protruding part 120p of the upper cover plate 120 may protrude from the front surface of the cell block 110 in the second direction (the Y-axis direction).Both the first port 1231 and the second port 1233 of the upper cover plate 120 may be on the protruding part 120p of the upper cover plate 120.Both the first port 1231 and the second port 1233 of the upper cover plate 120 may be on a lower surface of the protruding part 120p of the upper cover plate 120.

One of the two side cover plates 130 may cover the first side of the cell block 110, and the other may cover the second side of the cell block 110. The battery cell assembly 100 may be fastened to a pack housing 501 in a side mounting manner. For example, each of the side cover plates 130 may include one or more fastening flanges 139 protruding in the first direction (the X-axis direction). The fastening flange 139 may be provided with a fastening hole through which a fastening member such as a bolt passes. The fastening flange 139 may be fastened and supported on a support structure of the pack housing 501 by a fastening member such as a bolt.

The lower cover plate 140 may be disposed to face the lower surface of the cell block 110 and cover the lower side of the cell block 110. The lower cover plate 140 may be coupled to lower ends of the two side cover plates 130 on both sides of the cell block 110. For example, one side of the lower cover plate 140 may be coupled to a lower end of one of the side cover plates 130 by welding, and another side thereof may be coupled to a lower end of the other side cover plate 130 by welding. The lower cover plate 140, the upper cover plate 120, and the side cover plates 130 may form a case surrounding four surfaces of the cell block 110 together. In example embodiments, the lower cover plate 140 may be provided with a venting passage and/or a venting hole for exhausting a high-temperature gas caused by the cell block 110 to a space under the cell block 110.

The first pipe 150 may be connected to the first port 1231 of the upper cover plate 120, and the second pipe 160 may be connected to the second port 1233 of the upper cover plate 120.In example embodiments, the first pipe 150 may be coupled to the first port 1231 of the upper cover plate 120 by welding, and the second pipe 160 may be coupled to the second port 1233 of the upper cover plate 120 by welding. One of the first pipe 150 and the second pipe 160 may be a supply pipe configured to supply a cooling fluid from the outside to the cooling channel 123 of the upper cover plate 120, and the other may be a discharge pipe configured to discharge a cooling fluid from the cooling channel 123 of the upper cover plate 120 to the outside. Hereinafter, it will be described that the first pipe 150 is the supply pipe and the second pipe 160 is the discharge pipe, but the first pipe 150 may be the discharge pipe and the second pipe 160 may be the supply pipe.

The first pipe 150 may be supplied with a cooling fluid from an external cooling fluid supply CS through a first transfer pipe 301, and may transfer the cooling fluid to the first port 1231 of the upper cover plate 120. The first pipe 150 may provide a single flow path 157 extending from one end thereof connected to the first transfer pipe 301 to another end thereof connected to the first port 1231 of the upper cover plate 120.

When viewed from a side view, the first pipe 150 may have a roughly U-shape. More specifically, the first pipe 150 may include a first part 151 extending downward from the first port 1231 of the upper cover plate 120, a second part 153 extending from the first part 151 in a direction crossing a direction in which the first part 151 extends, and a third part 155 extending upward from the second part 153.An outlet 158 connected to the first port 1231 of the upper cover plate 120 may be provided on an upper end of the first part 151 of the first pipe 150, and an inlet 159 through which a cooling fluid is supplied from the outside may be provided on an upper end of the third part 155 of the first pipe 150. The upper end of the third part 155 of the first pipe 150 may be an end of the first pipe 150. The first pipe 150 may be attached to a lower surface of the upper cover plate 120, and an entire part thereof may be below the upper cover plate 120.

The second pipe 160 may discharge the cooling fluid from the upper cover plate 120 to a second transfer pipe 302, and the cooling fluid may be transferred to the external cooling fluid supply CS through a second transfer pipe 302. The second pipe 160 may provide a single flow path 167 extending from one end thereof connected to the second transfer pipe 302 to another end thereof connected to the second port 1233 of the upper cover plate 120.

When viewed from a side view, the second pipe 160 may have a roughly U-shape. More specifically, the second pipe 160 may include a fourth part 161 extending downward from the second port 1233 of the upper cover plate 120, a fifth part 163 extending from the fourth part 161 in a direction crossing a direction in which the fourth part 161 extends, and a sixth part 165 extending upward from the fifth part 163. An inlet 168 connected to the second port 1233 of the upper cover plate 120 may be provided on an upper end of the fourth part 161 of the second pipe 160, and an outlet 169 for discharging the cooling fluid to the outside may be provided on an upper end of the sixth part 165 of the second pipe 160. The upper end of the sixth part 165 of the second pipe 160 may be an end of the second pipe 160. The second pipe 160 may be attached to the lower surface of the upper cover plate 120, and an entire part thereof may be below the upper cover plate 120.

The battery cell assembly 100 may include a first support structure 181 for supporting the first pipe 150 and a second support structure 185 for supporting the second pipe 160. The first support structure 181 and the second support structure 185 may be provided on the end plate 170 on the front surface of the cell block 110.In example embodiments, each of the first support structure 181 and the second support structure 185 may be a part of the end plate 170.

The first support structure 181 may include a first bottom support 1811 supporting a lower part of the first pipe 150, and a first side support 1813 supporting a side of the first pipe 150. The first bottom support 1811 may be provided below the second part 153 of the first pipe 150, and support a lower portion of the second part 153 of the first pipe 150. The first side support 1813 may support and be in contact with a side of the first part 151 of the first pipe 150. The first part 151 of the first pipe 150 may be inserted into a groove in the first side support 1813.In example embodiments, a first elastic pad 191 may be provided between the first bottom support 1811 and the second part 153 of the first pipe 150.

The second support structure 185 may include a second bottom support 1851 supporting a lower part of the second pipe 160, and a second side support 1853 supporting a side of the second pipe 160. The second bottom support 1851 may be provided below the fifth part 163 of the second pipe 160 and support a lower portion of the fifth part 163 of the second pipe 160. The second side support 1853 may support and be in contact with a side of the fourth part 161 of the second pipe 160. The fourth part 161 of the second pipe 160 may be inserted into a groove in the second side support 1853.In example embodiments, a second elastic pad 193 may be provided between the second bottom support 1851 and the fifth part 163 of the second pipe 160.

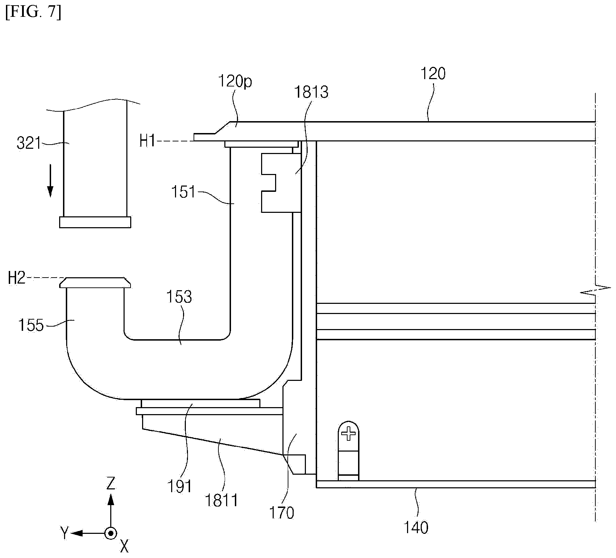

FIG. 7 is a side view of a part of the battery cell assembly according to embodiments of the present invention.

Referring to FIGS. 1 to 6 and 7, a position H2 of an upper end of the third part 155 of the first pipe 150 in the vertical direction (the Z-axis direction) may be lower than a position **H1 of** the lower surface of the upper cover plate 120 in the vertical direction (the Z-axis direction). Similarly, a position of the sixth part 165 of the second pipe 160 in the vertical direction (the Z-axis direction) may be lower than the position **H1** of the lower surface of the upper cover plate 120 in the vertical direction (the Z-axis direction). When pipes for transferring the cooling fluid are attached to the upper surface of the upper cover plate 120, a total thickness of the battery cell assembly 100 may increase and a space occupied by each battery cell assembly 100 may increase, thus resulting in a reduction of the energy density of a battery pack. However, according to embodiments, the entire first and second pipes 150 and 160 are below the upper cover plate 120 and thus the battery cell assembly 100 with a cooling function can be provided without causing an energy density reduction issue.

In addition, in embodiments, the first pipe 150 is attached to the lower surface of the upper cover plate 120, and the first support structure 181 may support the lower part of the first pipe 150.When a valve 321 is mounted on an end of the first pipe 150, an external force applied to the end of the first pipe 150 causes the first pipe 150 to rotate about a joint (e.g., a welded area) between the first pipe 150 and the upper cover plate 120, and the rotation of the first pipe 150 may cause the joint between the first pipe 150 and the upper cover plate 120 to be broken or damaged.

However, according to embodiments of the present invention, the first support structure 181 may support the lower part of the first pipe 150 to prevent the rotation of the first pipe 150 due to an external force applied when the valve 321 is mounted on the end of the first pipe 150. Similarly, the second support structure 185 may support the lower part of the second pipe 160 to prevent the rotation of the second pipe 160 due to an external force applied when a valve is mounted on an end of the second pipe 160.According to embodiments, bonding reliability between pipes (i.e., the first pipe 150 and the second pipe 160) for supplying and discharging a cooling fluid and a cooling plate (i.e., the upper cover plate 120) can be improved, thus increasing the reliability of the cooling performance of the battery cell assembly 100 and improving the safety and reliability of the battery cell assembly 100.

### (Second Embodiment)

FIG. 8 is a cross-sectional view of a battery pack 500 according to example embodiments of the present invention.

Referring to FIG. 8, the battery pack 500 may include a pack housing 501 and a battery cell assembly 100 mounted in the pack housing 501. The battery pack 500 may include one or more battery cell assemblies 100 mounted in the pack housing 501.In example embodiments, the battery pack 500 may include two or more battery cell assemblies 100 arranged in the first direction (the X-axis direction).

The pack housing 501 may include a lower housing 510 with an accommodation space in which the battery cell assembly 100 is accommodated, and a pack lid 520 coupled to the lower housing 510 to cover the lower housing 510 in which the battery cell assembly 100 is accommodated. The accommodation space of the lower housing 510 may be defined by a bottom wall 511 facing a lower surface of a cell block 110 of each battery cell assembly 100 and side walls 513 extending along the perimeter of the bottom wall 511.

When the battery pack 500 is mounted in a vehicle, a cabin room in which a passenger rides may be located above the pack lid 520, and the ground on which the vehicle travels may be located below the lower housing 510.

The battery cell assembly 100 may be mounted in the pack housing 501 in the side mounting manner. More specifically, a fastening flange 139 of each side cover plate may be fastened and supported on a corresponding support structure 515 among support structures 515 on the lower housing 510 through a bolt BT.

A free volume FV may be provided between the bottom wall 511 of the lower housing 510 and the battery cell assembly 100.A gas and flames generated in a thermal runaway situation may move through the free volume FV. That is, the free volume FV functions as a venting passage through which a high-temperature gas and flames may move.

Even when strong impact is generated due to a foreign material splashing to a lower part of a vehicle when driving on a hard ground such as a non-paved road, the impact may be absorbed through the free volume FV. Therefore, the plurality of battery cell assemblies 100 may be prevented from being damaged due to the impact. The free volume FV may be understood as an empty space between each of a plurality of battery cell assemblies 100 and the lower housing 510. The free volume FV may be available as a space for freely allowing deformation of the lower housing 510 to some extent when the lower housing 510 deforms toward the battery cell assembly 100 due to an impact applied to the lower part of the vehicle.

A height of the free volume FV and a distance between the bottom wall of the lower housing 510 and the battery cell assembly 100 may be determined enough to absorb external impact. The height of the free volume FV may be determined in consideration of dimensions and rigidity of frames of the vehicle, dimensions and rigidity of the lower housing 510, dimensions of the battery pack 500, the amount of a generated gas and a gas discharge rate during thermal runaway, and the like. For example, when the thickness or rigidity of the frames of the vehicle or the bottom wall of the lower housing 510 is relatively large, at least one of the size and height of the free volume FV may be relatively reduced. When the thickness or rigidity of the frames of the vehicle or the bottom wall of the lower housing 510 is relatively small, the bottom wall of the lower housing 510 is highly likely to deform and thus at least one of the size and height of the free volume FV may be relatively increased to protect the battery cell assembly 100.When the size of the battery pack 500 is relatively large compared to the specifications of the battery pack 500, a relatively large free volume FV may be secured. When the size of the battery pack 500 is relatively small, a height of the free volume FV to be secured may be relatively small and thus the thickness and rigidity of the bottom wall of the lower housing 510 may have to be relatively increased. When the height of the free volume FV is extremely small, a gas discharge passage may be small and thus internal pressure of the battery pack 500 may increase sharply during thermal runaway. Accordingly, the size and height of the free volume FV may be determined in consideration of the amount of a generated gas and a gas discharge rate.

A maximum height of the free volume FV may be determined according to a degree of damage to battery cells 111 included in the battery cell assembly 100. For example, when damage tolerance of the battery cell 111 is 1 mm, the free volume FV may be determined to prevent the battery cell 111 from deforming by more than 1 mm when the lower housing 510 deforms and presses a lower surface of the battery cell 111.In this case, a degree of deformation of the lower housing 510 may vary according to the thickness or rigidity of the lower housing 510. Therefore, the size or height of the free volume FV may be determined in consideration of all the damage tolerance of the battery cell 111 and the thickness and rigidity of the lower housing 510.

In example embodiments, an upper surface of the battery cell assembly 100 may be in close contact with a lower surface of the pack lid 520.When there is a space between the battery cell assembly 100 and the pack lid 520, a high-temperature gas may flow into the space between the battery cell assembly 100 and the pack lid 520 during thermal runaway and thus heat and flames may propagate to an adjacent battery cell assembly 100. The heat and the flames may also be transferred to the pack lid 520 and thus may affect the cabin room above the pack lid 520. Therefore, a gas or flames generated in the battery pack 500 may be guided to the free volume FV by bringing the upper surface of the battery cell assembly 100 and the lower surface of the pack lid 520 into close contact with each other.

### (Third Embodiment)

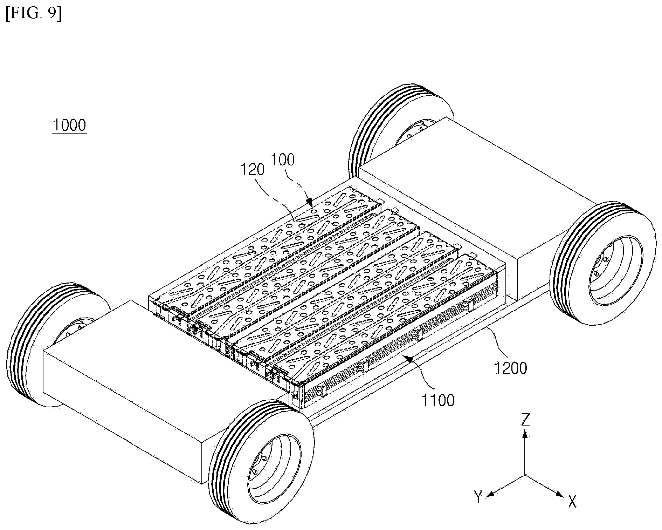

FIG. 9 is a schematic view of an electric vehicle 1000 in which a battery pack 1100 according to example embodiments of the present invention is mounted.

For the sake of simplicity, FIG. 9 illustrates only a vehicle body frame 1200 forming a lower frame of the electric vehicle 1000, and the battery pack 1100 and tires that are coupled to the vehicle body frame 1200. For example, the battery pack 1100 may include the battery pack 500 described above with reference to FIG. 8.

In the case of a general battery pack, battery cell assemblies are installed at the bottom of a pack housing of the battery pack.In embodiments, the free volume FV (see FIG. 8) may be provided under battery cell assemblies 100 of the battery pack 1100. That is, due to no space between the battery cell assembly 100 and the pack lid 520, a gas generated in the battery cell assembly 100 may be prevented from being transferred to a cabin room corresponding to an upper part of the electric vehicle 1000. The gas is guided to the free volume FV between the battery cell assembly 100 and a pack housing of the battery pack 1100. The gas may flow through the free volume FV and be discharged to a lower side of the electric vehicle 1000 through a gas exhaust installed in the battery pack 1100.In addition, according to the present embodiments, in the battery pack 1100, the free volume FV is provided between the battery cell assembly 100 and the pack housing and thus the battery cell assembly 100 can be prevented from being damaged regardless of the deformation of the pack housing.

According to embodiments of the present invention, the battery pack 1100 and the electric vehicle 1000 including the battery pack 1100 are capable of increasing the safety of passengers. In addition, the battery cell assembly 100 that is a key component can be protected and the durabilities of the battery pack 1100 and the electric vehicle 1000 can be enhanced.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery cell assembly comprising:
a cell block with a plurality of battery cells;
an upper cover plate provided on the cell block and including a cooling channel;
a first pipe connected to a first port of the upper cover plate and configured to transfer a cooling fluid; and
a first support structure configured to support the first pipe,
wherein the first pipe comprises:
a first part extending downward from the first port of the upper cover plate;
a second part extending from the first part in a direction crossing a direction in which the first part extends; and
a third part extending upward from the second part.

2. The battery cell assembly of claim 1, wherein
an upper end of the third part of the first pipe is an end of the first pipe, and
the upper end of the third part of the first pipe is located at a position below than the first port of the upper cover plate.

3. The battery cell assembly of claim 1, wherein
the first support structure comprises
a first bottom support provided below the second part of the first pipe and configured to support the second part of the first pipe.

4. The battery cell assembly of claim 3, further comprising
a first elastic pad between the first bottom support and the second part of the first pipe.

5. The battery cell assembly of claim 1, wherein
the first support structure further comprises a first side support configured to support a side of the first part of the first pipe.

6. The battery cell assembly of claim 1, further comprising:
a second pipe connected to a second port of the upper cover plate and configured to transfer the cooling fluid; and
a second support structure configured to support the second pipe,
wherein one of the first pipe and the second pipe is configured to transfer the cooling fluid supplied from the outside to the cooling channel of the upper cover plate, and
the other one of the first pipe and the second pipe is configured to transfer the cooling fluid discharged from the cooling channel of the upper cover plate to the outside.

7. The battery cell assembly of claim 6, wherein
the second pipe comprises:
a fourth part extending downward from the second port of the upper cover plate;
a fifth part extending from the fourth part in a direction crossing a direction in which the fourth part extends; and
a sixth part extending upward from the fifth part.

8. The battery cell assembly of claim 7, wherein
an upper end of the sixth part of the second pipe is an end of the second pipe, and
the upper end of the sixth part of the second pipe is located at a position below than the second port of the upper cover plate.

9. The battery cell assembly of claim 7, wherein
the second support structure comprises
a second bottom support provided below the fifth part of the second pipe and configured to support the fifth part of the second pipe.

10. The battery cell assembly of claim 9, further comprising
a second elastic pad between the second bottom support and the fifth part of the second pipe.

11. The battery cell assembly of claim 7, wherein
the second support structure further comprises a second side support configured to support a side of the fourth part of the second pipe.

12. The battery cell assembly of claim 7, wherein
the upper cover plate comprises a protruding part extending to a side of the cell block, and
the first port and the second port of the upper cover plate are on a lower surface of the protruding part of the upper cover plate.

13. The battery cell assembly of claim 1, further comprising:
an end plate facing a front surface of the cell block and including the first support structure; and
a side cover plate facing a side of the cell block and including a fastening flange to be fastened to an external structure; and
a lower cover plate facing a lower surface of the cell block.

14. The battery cell assembly of claim 1, wherein
the first pipe is coupled to the upper cover plate by welding.

15. A battery pack comprising:
a pack housing; and
a battery cell assembly accommodated in the pack housing,
wherein the battery cell assembly comprises:
a cell block with a plurality of battery cells;
an upper cover plate provided on the cell block and including a cooling channel;
a first pipe connected to a first port of the upper cover plate and configured to transfer a cooling fluid, the first pipe including a first part extending downward from the first port, a second part extending from the first part in a direction crossing a direction in which the first part extends, and a third part extending upward from the second part;
a second pipe connected to a second port of the upper cover plate and configured to transfer the cooling fluid, the second pipe including a fourth part extending downward from the second port, a fifth part extending from the fourth part in a direction crossing a direction in which the fourth part extends, and a sixth part extending upward from the fifth part;
a first support structure configured to support a lower portion of the second part of the first pipe; and
a second support structure configured to support a lower portion of the fifth part of the second pipe.
